# EUROPEAN PATENT APPLICATION

(11) **EP 2 784 558 A1**
(43) Date of publication of application: **01.10.2014**
(21) Application number: 13161430.7
(22) Date of filing: 27.03.2013
(51) Int. Cl.: G02B 6/42

(54) **Optoelectronic device coupled to an optical fiber and method of assembling**

(71) Applicant: CCS Technology, Inc., Wilmington, DE 19803 (US)
(72) Inventor: Kossat, Rainer, 83229 Aschau (DE)
(74) Representative: Epping - Hermann - Fischer

(57) **Abstract**

An optoelectronic device and a method for assembling an optoelectronic device are provided which allow coupling of an optical fiber with less constructional complexity of the design of the optoelectronic device, thus reducing the effort for manufacturing the components of the optoelectronic device. To this end, an optoelectronic substrate is mounted on a mounting surface of a mounting substrate on edge, i.e. edgewise on one of its sidewalls; a coupling surface of the optoelectronic device being oriented transverse to the mounting surface and thus directly facing the axial direction of the fiber endpiece of an optical fiber. A fiber portion arranged at a distance from the fiber endpiece contacts a glue droplet arranged on or above the mounting surface of the mounting substrate. The optoelectronic device and the assembling method obviate the need for providing any further substrate pieces or substrate-like structural elements only for aligning purposes.

## Description

### TECHNICAL FIELD

The application refers to an optoelectronic device. The application further refers to a method of assembling an electronic device.

### BACKGROUND

Optoelectronic devices for coupling optical fibers usually comprise, apart from a mounting substrate such as a printed circuit board, for instance, an optoelectronic substrate having an optoelectronic element. The optoelectronic element may be a vertical cavity surface-emitting laser (VCSEL), a photodiode, a laser diode, a photodetector or any other element capable of emitting or detecting electromagnetic radiation, for instance visible light or infrared or ultraviolet radiation. Optical fibers to be coupled to optoelectronic elements need to be aligned with respect to it so as to ensure efficient coupling of the radiation propagating between an endpiece of the optical fiber and the optoelectronic element, with minimum loss of radiation. To this end, the optoelectronic device comprising the optoelectronic substrate may further comprise further substrates or substrate-like structural elements, in addition to the mounting and optoelectronic substrates. Accordingly, conventionally, connecting the fiber endpiece to achieve proper alignment requires considerable constructional effort.

It is desirable to provide an optoelectronic device allowing alignment of the optical fiber with less constructional complexity of the design of the optoelectronic device. It is further desirable to provide a method for more efficiently constructing or at least assembling optoelectronic devices, with less effort for manufacturing the components of the optoelectronic device to be assembled.

### SUMMARY OF THE DISCLOSED EMBODIMENTS

Embodiments disclosed in the detailed description include an optoelectronic device as specified in claim 1 and a method of assembling an optoelectronic device as specified in claim 7.

According to the application, the optoelectronic substrate is mounted on the mounting substrate on edge, i.e. edgewise, with one of its sidewalls, especially with a chip sidewall resulting from wafer dicing, serving as a support surface with which the optoelectronic substrate rests on the mounting substrate of the mounting substrate. Accordingly, the coupling surface is transverse to the mounting surface, with the normal direction of the coupling surface directed essentially parallel to the mounting surface; the coupling surface thus being perpendicular to the mounting surface of the mounting substrate and, likewise, to the support surface of the optoelectronic device. Accordingly, an outer surface or interface surface (such as a top surface of the chip representing the optoelectronic substrate or an interface surface closely beneath that top surface, for instance) that comprises and/or surrounds the coupling surface, or at least the coupling surface itself, is oriented orthogonally to the mounting surface and thus faces the axial direction of the fiber endpiece of the optical fiber directly. Whereas a fiber endpiece of the optical fiber is connected to or at least points at the coupling surface extending orthogonally to the mounting surface of the mounting substrate, another fiber portion arranged at a distance from the fiber endpiece is in contact with and/or immersed in a glue droplet, which glue droplet is arranged in a fixed position relative tothe mounting surface of the mounting substrate. For instance, the glue droplet may be directly attached to the mounting surface.

The optoelectronic device obviates the need for providing, in addition to the mounting substrate and the optoelectronic substrate, any further substrate pieces or substrate-like structural elements only for aligning purposes.Instead, fiber alignment is accomplished by the connection or at least alignment of the fiber endpiece to the coupling surface right from its normal direction which substantially corresponds to the axial direction of the fiber. The device and the method of the application thus do not necessarily require the conventional deflection of the light beam by 90° und thus are much easier to realize, the more so as only at least one glue droplet for gluing a fiber portion on or above the mounting surface is required, but no additional substrate-like structures being required.

Furthermore, according to the application, the method of assembling an optoelectronic device overcomes the need for producing, aligning and mounting further substrates or substrate-like structures, in addition to the mounting substrate and the optoelectronic substrate, only for the purpose of coupling the fiber to the optoelectronic element. Thus time and effort for manufacturing the components of the optoelectronic device to be assembled are reduced.

### BRIEF DESCRIPTION OF THE DRAWINGS

Exemplary embodiments are disclosed herein with respect to the figures and which show:
- Figure 1: a schematical cross-sectional view of an embodiment of an optoelectronic device,
- Figure 2: an enlarged, partial view of Figure 1,
- Figure 3: a perspective view of a first embodiment corresponding to Figures 1 and 2,
- Figure 4: an embodiment similar to Figure 3,
- Figure 5: a perspective view of a second embodiment similar to Figure 3,
- Figure 6: a partial cross-sectional view of an embodiment with the optoelectronic substrate partially embedded in the mounting substrate,
- Figures 7 to 9: perspective views of the mounting surface of the optoelectronic device during assembly; with tools such as fiber grippers being additionally shown,
- Figure 10 a: cross-sectional view through a center plane of the gripper shown in Figure 9,
- Figure 11: a cross-sectional side view illustrating an exemplary embodiment of a method of assembling the optoelectronic device, particularly regarding the step of positioning or aligning the optical fiber,
- Figure 12: a schematical top view of an embodiment of a method performed using a pair of camera systems,
- Figure 13: a perspective view, related to the method of Figure 12, from above the axial direction of the optical fiber,
- Figure 14: another perspective view, related to Figures 12 and 13, from another direction diagonally to the axial direction of fiber,
- Figure 15: a cross-sectional view of an embodiment of an optoelectronic substrate being a compound substrate,
- Figure 16: a schematical cross-sectional view of an embodiment of an optoelectronic device similar to Figure 1 and
- Figure 17: a partial view of an optoelectronic device showing a coated fiber in contact with the glue droplet.

### DETAILED DESCRIPTION OF EMBODIMENTS

In the following, the same reference signs are used throughout the figures. Accordingly, reference signs referred to in the context of a particular figure but perhaps not shown in this figure may thus refer to any other figure of the application, without however restricting the disclosure or embodiment of that other figure.

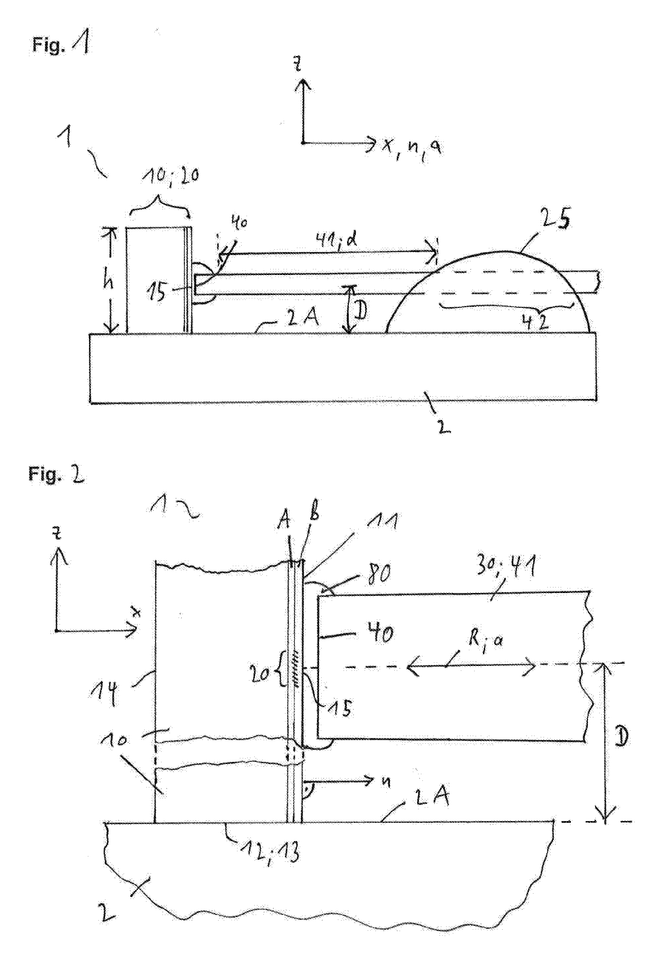

Figure 1 shows a schematical cross-sectional view of one exemplary embodiment of the optoelectronic device 1. The optoelectronic device 1 comprises a mounting substrate 2 such as a printed circuit board or a glass substrate, a quartz substrate, a ceramic substrate, a synthetic substrate (such as a polymer substrate), or a semiconductor substrate (such as a silicon substrate), for instance. In addition, the optoelectronic device 1 comprises at least one optoelectronic substrate 10 such as a semiconductor substrate, which may be a silicon substrate or a substrate comprising one or more layers of binary, ternary and/or quaternary III-V-semiconductor materials, for instance. The optoelectronic substrate 10 may further be a glass substrate, a quartz substrate, a ceramic substrate or a synthetic substrate (such as a polymer substrate). In case of a semiconductor material, silicon may be used for transmission of infrared radiation with wavelengths above 1000 nm. Each optoelectronic substrate 10 comprises at least one optoelectronic element 20 capable of emitting or detecting electromagnetic radiation R in the range of visible light, in infrared or in the ultraviolet frequency range. The optoelectronic element 20 for instance is a VCSEL (vertical cavity surface-emitting laser), a photodiode, a laser diode, a photodetector or any other optoelectronic element 20. The optoelectronic element 20 preferably is a surface-emitting element or surface-detecting element arranged at or closely below a coupling surface 15 of the optoelectronic substrate 10.

In the application, the optical fiber 30 encompasses all kinds of fibers usable for transmission of electromagnetic radiation, including visible light as in case of a glass fiber as well as radiation invisible to the human eye, such as infrared or ultraviolet radiation.

In the cross-sectional view of Figure 1 spanned by a first lateral direction x and a vertical direction z, at least one optical fiber 30 is to be coupled to the optoelectronic substrate 10 so as to enable propagation of electromagnetic radiation R between them. Along a second lateral direction y, plural optical fibers may be provided for coupling to plural optoelectronic elements 20 of one or plural optoelectronic substrates 10. Acordingly, two or more optoelectronic substrates 10 may be provided on the mounting surface 2A, each one provided with one or plural coupling surfaces 15, that is coupling surface areas for coupling with a respective optical fiber. Each optical fiber comprises a fiber endpiece 40 to be arranged in an aligned coupling position with respect to the coupling surface 15 of the electronic substrate 10, so as to enable communication via electromagnetic radiation propagating between them.

The optoelectronic device 1 further comprises at least one glue droplet 25, preferably one per each optical fiber 30. The at least one glue droplet 25 is fixed in its position relative to the mounting surface 2A of the mounting substrate 2. In Figure 1,the glue droplet 25 is directly attached to and particularly glued on the mounting surface 2A. Alternatively, it can be glued on a pedestal, that is a support block made of a material having a defined contour or outer shape, which pedestal is in turn mounted on the mounting surface 2A. The glue droplet 25 is made of a glue material or any other adhesive material. Preferably, a resist material being UV-curable or curable by laser radiation of a CO₂-laser, for instance, may be used. When connecting an optoelectronic substrate and an optical fiber to one another, epoxy resin, or acrylate, is usable as adhesive material; these materials may likewise be used for forming the droplets. Preferably, however, there should be a considerable difference in the refractive index of at least ±0.3, preferably at least ±0.6 between the droplet 25 and the optical fiber 30 in case that the glue droplet 25 contacts the radiation-transmissive fiber material directly. For instance, the difference between the refractive indices of the glue droplet and of the optical fiber may be between ±0.3 and ±0.6, or even larger. The same amount of difference in the refractive index may be chosen for any other embodiment of the application. Alternatively, the first fiber portion 42 which contacts the glue droplet 25 may be a coated fiber portion, without requiring any adjustment of the refractive indices. The coating of the fiber thus may surround the first fiber portion 42 and may also surround a part of the first fiber section 41, whereas the fiber endpiece 40 and a part of the first fiber section 41 are uncoated and thus exposed to the ambient atmosphere or air. Since the first fiber portion 42 may be coated, the glue droplet 25 may contact the coating of the fiber but does not need to contact the radiation-transmissive fiber material directly.

By the way, the optical fiber may comprise a fiber core as well as a fiber cladding surrounding the fiber core. The core and the cladding may combinedly constitute the radiation-transmissive optical fiber 30, and no fiber coating needs to be around them. Alternatively, the optical fiber 30 may include a coated fiber region as well as an uncoated fiber region; and all claims, figures and further embodiments of the application refer to both above alternatives, as well as to those described below. In case of an at least partially coated fiber, for instance, the first fiber portion 42 may form part of the coated fiber region or, alternatively, of the uncoated fiber region.

As an example, the diameter of the coated fiber may be 250 µm including the coating and 125 µm without the coating. The fiber cladding may have a diameter of 125 µm and the fiber core may have a diameter of up to 80 µm, for instance. However, for high-frequency applications, the fiber core diameter may be as small as between 10 and 25 µm. However, any numerical values throughout the application are only exemplary. By the way, the coupling surface 15 may have a smaller diameter of about 30 µm, for instance.

In Figure 1 as well in all other Figures, claims and embodiments of the application, a fiber coating may be present around the optical fiber 30. Furthermore, the fiber coating may surround the first fiber portion 42 and, optionally, also a part of the first fiber section 41. In the Figure 1 and the further figures, the fiber coating is not explicitly illustrated for easier illustration. The radiation-transmissive material of the optical fiber is then surrounded by the fiber coating. In particular, in the (first) fiber portion 42 of the optical fiber 30, the fiber coating surrounding the radiation-transmissive material of the optical fiber (rather than the radiation-transmissive material itself) may contact the glue droplet. However, the entire fiber still is surrounded by the material of the glue droplet and/or immersed in it. In the case of an uncoated first fiber portion 42, the radiation-transmissive material itself may contact the material of the glue droplet. If the optical fiber has a coating, the axial end of the coating preferably is around the first fiber section 41, that is at an axial position between the fiber endpiece 40 and the first fiber portion 42 contacting, immersed in or surrounded by the glue droplet 25.

In contrast to other kinds of glue patches, of adhesive or of resist material sandwiched between two object surfaces, the glue droplet 25 is provided and maintained with a drop-shape or droplet-shape and thus has an overall curved outer surface, such as a semispherical surface, a semi-elliptical surface or an otherwise bulging surface exposed to the ambient atmosphere or air. Accordingly, with the exception of the optical fiber 30 which is in contact with, immersed or embedded in and/or surrounded by in the droplet, and with the exception of the mounting surface 2A supporting the glue droplet 25, the droplet is not confined by surfaces of other objects or components of the optoelectronic device. Generally, the exposed outer surface of the at least one glue droplet 25 is formed as a distorted semi-sphere; its cross-sectional view in Figure 1 being distortedly semi-circular.

As apparent from Figure 1, the first fiber portion 42 of the optical fiber 30 is in contact with and/or immersed in the glue droplet 25. Preferably, the first fiber portion 42 is also surrounded by the glue droplet 25. The first surface portion 42 is connected to the fiber endpiece 40 via a first fiber section 41 exposed to the ambient atmosphere or air. The axial length of the first fiber section 41 may be less than 10 mm, preferably less than 6 mm. Provided a sufficiently short length of the first fiber section 41 or distance between the fiber endpiece 40 and the first fiber portion 42, sufficient alignment of the fiber endpiece is achievable with the help of the at least one glue droplet 25 spaced apart from the fiber endpiece 40. As indicated in Figure 1, generally the fiber endpiece 40 comprises a fiber end surface which, preferably, is flat and is oriented perpendicularly to the axial direction of the optical fiber. The fiber end surface may be a cleaved and/or polished surface.

According to Figure 1, the optical fiber 30, particularly between the fiber endpiece 40 and the fiber portion 25, is only spaced apart from the mounting surface 2A by a mounting distance D of less than 1 mm, for instance, the fiber extending laterally, in parallel to the mounting surface 2A of the mounting substrate 2, particularly in the fiber region closest to the optoelectronic substrate 10. Accordingly, this part of the fiber directly approaches the coupling surface 15 of the optoelectronic substrate 10 right from its normal direction n which coincides with the axial direction a of the fiber and/or the first lateral direction x. This embodiment advantageously combines a fiber orientation parallel or approximately parallel, with a deviation of up to 10° or even 15° at maximum, to the mounting surface 2A of the mounting substrate 2; with an optoelectronic substrate 10 orientation turned by 90° compared to conventional designs and thus standing edgewise or on edge on the mounting surface 2A. Actually, the coupling surface 15 represents an upper surface or top surface of the optoelectronic substrate per se (in particular bearing in mind that the optoelectronic substrate 10 is a chip, that is a piece of wafer material with at least one integrated circuit element (such as a VCSEL, photodiode or another optoelectronic element 20). However, when integrated in the optoelectronic device 1, the optoelectronic substrate 10 is mounted with the coupling surface 15 oriented vertically, with its normal direction horizontally orin parallel to the mounting surface 2A. Nonetheless, preferably the optoelectronic element 20 of the optoelectronic substrate 10 is a surface-emitting or surface-detecting device; the active area thus being defined by the circumference, footprint or base area of a layer (either a top layer 11 forming part of the shape of the substrate 10, or an interface layer closely underneath the top layer), rather than by a narrow line representing an edge of an interface surface between two layers. Accordingly, the optoelectronic substrate 10 is surface-emitting or surface-detecting in a direction normal to the layers and their main surfaces forming the optoelectronic substrate 10. Such surface-emitting or surface-detecting substrates are conventionally mounted with their coupling surface 15 oriented parallel to the mounting surface 2A, and reflection of the electromagnetic radiation is caused by means of a reflective element.

As apparent from Figure 1, apart from the optoelectronic substrate 10 and the fiber endpiece 40, no further substrates, patterned layers or similar structural elements are required for aligning the optical fiber 30 to the optoelectronic substrate 10. Instead, only at least one glue droplet 25 per fiber is used. Accordingly, the constructional effort is minimized compared to conceivable arrangements including further devices or structural elements which in turn have to be aligned or self-aligned with respect to the optoelectronic substrate.

Figure 2 shows an enlarged, partial view Figure 1. As apparent from Figure 2, the optoelectronic substrate 10 is resting on its sidewall 13, thus representing a support surface 12 in contact with the mounting surface 2A. Contact between both surfaces may be achieved by gluing, soldering, bonding or further techniques. As shown in closer detail in Figure 2, the optoelectronic substrate 10 may comprise a number of layers, doping regions or further planar structures stacked on one another. For instance, one, two or more optoelectronically active layers A, B may be arranged at or closely below (at a depth of 30 µm at maximum, for instance) the upper surface oriented vertically in Figure 2, which surface faces the fiber endpiece 40. Usually, not the entire top surface 11 of the chip constituting the optoelectronic substrate 10 will represent the coupling surface 15, but only a part of it. The entire substrate 10 may, for instance, have a thickness of 150 µm in the direction of its normal direction n and have lateral extensions (related to the chip area or wafer area, that is in a non-edgewise orientation other than seen in Figure 2) of 200 µm x 200 µm, which are typical dimensions of a VCSEL. Alternatively, in the case of a photodiode, the thickness might be 150 µm and the lateral dimensions 235 µm x 235 µm. Usually, one conductive contact pad of the VCSEL or two conductive contact pads of a photodiode are arranged within the extension of the upper or top chip surface 11 and are offset laterally, and particularly diagonally with regard to the active area defining the coupling surface 15 of the optoelectronic element 20.

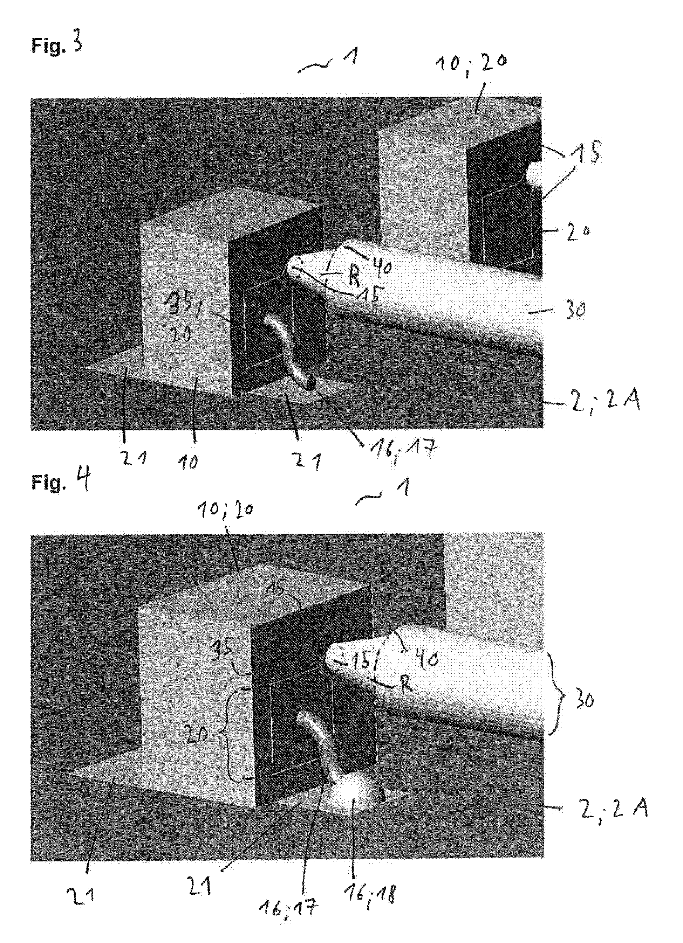

Figure 3 shows a perspective view of a first exemplary embodiment regarding the electric connection between the substrates 2 and 10. The mounting substrate 2 comprises electrical contacts 21 to be connected to contact surfaces 35 on the chip top surface 11 or at least coplanar and connected with the coupling surface 15 of the optoelectronic element 20. According to Figure 3, inter alia bond wires 17 are used as contact structures 16 between the electrical contacts 21 and the contact surface 35. Since the substrate 10 is a chip or wafer piece shaped by dicing, at least one bond wire may already be bonded onto the contact surface 35 before dicing and thereby shaping the substrate 10. Thus a first bonding step may be performed on a wafer-level basis. After dicing, each optoelectronic substrate 10 is mounted edgewise, with the former top surface 11 and/or the coupling surface 15 extending orthogonally to the mounting surface 2A of the mounting substrate, for instance by gluing or soldering. A further bond wire on the rear surface 14 opposed to the top surface 11 may then likewise be provided. The free, disconnected end of each bond wire is then electrically connected to the respective electrical contact 21 of the mounting substrate 2. To this end, according to Figure 4, a bond ball 18 may be provided as an additional contact structure 16 at each bond wire; thus completing the step of mounting the at least one optoelectronic substrate 10 on the mounting substrate 2. Alternatively, each substrate 10 may be fixed to the mounting substrate 2 before attaching the at least one bond wire 17 or other kind of contact structure 16 to both the mounting substrate 2 and the respective optoelectronic substrate 10.

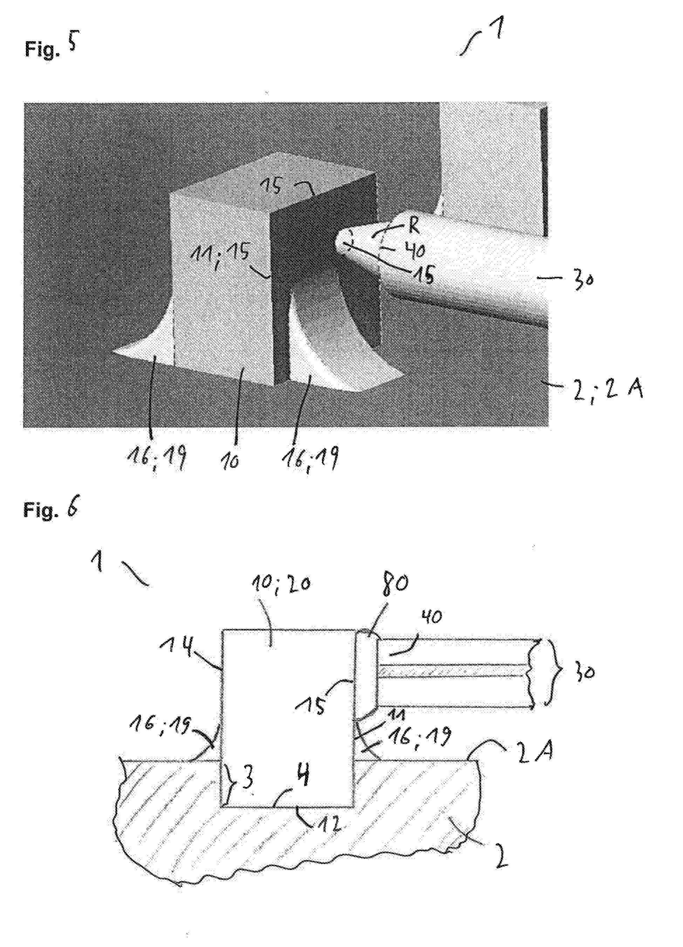

Figure 5 shows a second, alternative embodiment in which the contact structures 16 are formed of a solder material 19 which preferably directly connects the electrical contacts 21 of the mounting substrate 2 with the respective contact surfaces 35 of the optoelectronic substrate 10. As in Figures 3 and 4, the contact surfaces 35 are provided on the surface 11 representing the former top surface of the chip or piece of wafer which comprises the coupling surface 15, and/or at the rear surface 14 (Figure 2), for instance. Soldering may be performed by laser soldering or reflow soldering, for instance. Due to the edgewise mounting of both substrates 2, 10 relative to one another, the actual rear surface 14 and top surface 11 of the optoelectronic substrate 10 are oriented above the mounting surface 2A as if they were sidewalls of the optoelectronic substrate 10. Accordingly, both surfaces 14, 11 are extending orthogonally or at least inclined, with an angle between 80° and 100°, with regard to the support surface 2A on which the optoelectronic substrate 10 is resting. Particularly, the top surface 11 comprising, as a partial area, the coupling surface 15, and the support surface 12 are orthogonal to each other by 90°. The coupling surface 15 does not need to share a common edge with the support surface 12. Rather, the coupling surface 15 may be arranged at a certain height or distance from the mounting surface 2A. This distance preferably corresponds to the mounting distance D of the optical fiber 30 from the mounting surface 2A, as already shown in Figures 1 and 2. Generally, in generalization of Figures 3 to 5, the optoelectronic element 20 may be a photodiode rather than a VCSEL, for instance, or any other element capable of emitting or detecting electromagnetic radiation.

The embodiments of Figures 1 to 5 thus take advantage of reduced vertical dimensions, i.e. distances from the mounting surface 2A, thus also reducing the height or distance to which any contact structures 16 have to extend to. In particular, the contact surfaces 35 of the at least one optoelectronic substrate 10 are closer to the mounting substrate 2. Moreover, the optical fiber 30 is closer to the mounting surface 2A, as a result of which its mounting means, such as the at least one glue droplet or, optionally, any pedestals or support blocks supporting the glue droplet, may be designed to be shallow rather than tall. Accordingly, the distance of the optical fiber 30 from the mounting surface 2A is also smaller.

Figure 6 shows an embodiment for further reducing this distance by providing a recess 3 in the mounting surface 2A. The optoelectronic substrate 10 is thus lowered into the recess, the support surface 12 of the substrate 10 being totally embedded in and/or lowered beneath the surrounding mounting surface 2A of the mounting substrate 2. In Figure 6 the bottom surface 4 of the recess or indentation is parallel to the surrounding area of the mounting surface 2A. However, it might also be inclined by an angle of up to 10°. Figure 6 may be combined with any of Figures 1 to 5 and with any other feature or embodiment of the present application. In Figure 6, the fiber endpiece 40 again has a flat endpiece surface perpendicular to the optical axis or axial direction of the optical fiber 30. This preferably is also the case for all other figures of the application. The coupling surface 15, for instance, is an active area surface such as an emitter surface of a VCSEL or of another kind of radiation-emitting device, or a light-sensitive surface of a photo diode. The coupling surface 15 and the fiber endpiece 40 are fixed to one another in an aligned position by means of a drop or layer of adhesive 80 as indicated in Figure 1, 2 or 6. When approaching the fiber endpiece 40 towards the coupling surface 15, preferably by gripping and then guiding or otherwise moving the optical fiber 30 along the normal direction n of the coupling surface 15, the adhesive 80 may already be applied between them, or may be applied later. The adhesive 80 may be an optical adhesive transparent for the wavelength to be emitted or detected by the optoelectronic element 20, for instance epoxy resin or acrylate. Curing and thereby hardening of the adhesive 80 may be executed using exposure to UV-radiation or thermally, for instance by exposure to laser light. Curing of the adhesive 80 according to one of Figures 1 to 6 may be performed partially prior to, and partially subsequently to positioning and/or aligning the fiber endpiece 40 with respect to the coupling surface 15. Thus, a first step of pre-curing may be performed directly after a drop or layer of an adhesive 80 is attached to the coupling surface 15. Final curing may be performed later after the fiber endpiece 40 is brought in contact with the adhesive 80. Preferably, the adhesive 80 has a refractive index corresponding to that of the optical fiber with a difference in refractive index of 0.1 at maximum, for instance. The adhesive 80 ensures the preservation of a proper alignment and mechanical stability and, in comparison with a gap of air having to be bridged, reduces the divergence of light in the gap and thereby increases coupling efficiency.

By the way, the optoelectronic substrate 10 may comprise a metal block, preferably on its rear surface 14 opposed to the surface comprising the coupling surface 15. For instance, a metal block of copper, or another metal or metal alloy may be provided which may be mounted to the substrate 10 before or after mounting it onto the mounting substrate 2. Such a metal block may serve to cool the optoelectronic element 20 during operation. One of the exposed surfaces of the metal block, for instance its rear surface, may then be connected in like manner as if it were the rear surface 14 of the optoelectronic substrate 10 itself.

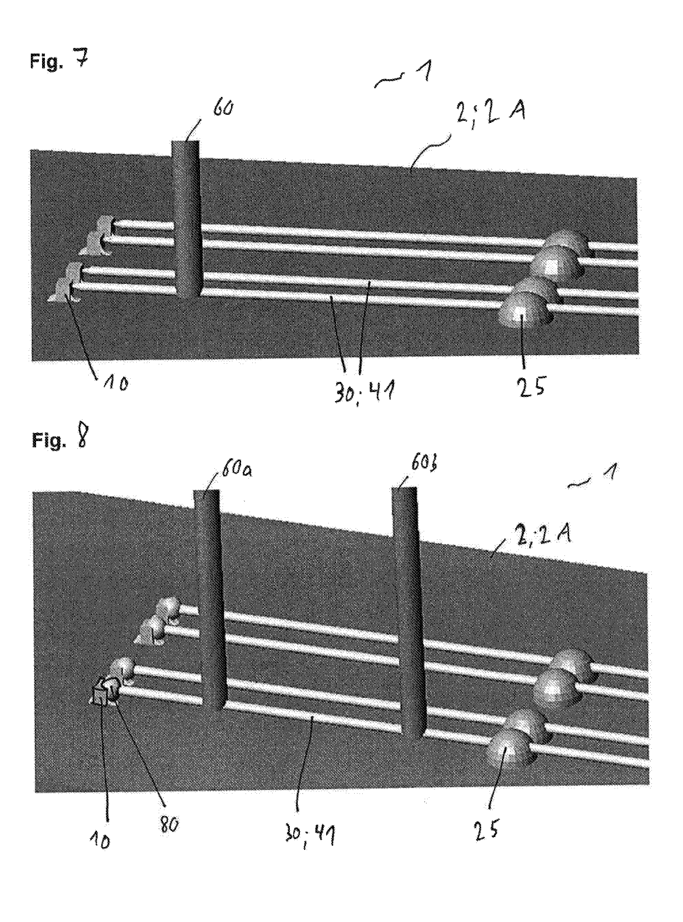

Figure 7 shows a perspective view of the mounting surface 2A illustrating one of the steps of assembling the optoelectronic device 1. According to one embodiment, before or after having mounted one or plural optoelectronic substrates 10 on the mounting surface 2A, the fiber endpieces are first coupled to the optoelectronic substrates 10 before the glue droplets 25 are applied and the optical fibers are immersed into them. Alternatively, the optical fibers can be immersed into the glue droplets 25 first, before coupling the optical fibers to the optoelectronic substrates 10.

The glue droplets 25 may be applied to the mounting surface 2A directly or, alternatively, may applied on a support block mady of any kind of material, such as a ridge or a fin, for instance, which does not need to comprise any electric components but only serves as a pedestal for projecting above the mounting surface 2A so as to provide an elevated support area for the glue droplets 25. Regarding the step of applying the glue droplets 25, this step can be executed before, concurrently with or even after mounting the substrates 2, 10 to one another.

No matter what consecutive order of steps is chosen, according to Figure 7 each fiber may be guided or otherwise moved, positioned and/or coupled to the coupling surface 15 of the respective optoelectronic substrate 10 by means of one or plural grippers 60. The gripper 60 preferably is an air suction gripper, such as a vacuum gripper. The lower end of the gripper is formed to receive an optical fiber. By under-pressure, that is negative pressure compared to the ambient atmosphere, exerted through a suction tube within the gripper 60, the fiber is gripped by the gripper 60 so as to be guided or moved in order to accomplish proper positioning and/or alignment. Figure 7 shows only one gripper 60 holding one optical fiber 30 at its first fiber section 41, preferably at a gripping spot closer to the fiber endpiece 40 than to the fiber portion 42 contacting and/or immersed in (or to be brought in contact with and/or to be immersed in) the glue droplet 25. The fiber endpieces 40 are to be aligned with the coupling surfaces 15 and preferably also to be secured to the coupling surfaces 15. To this end, as depicted in Figure 8, a respective drop or layer of adhesive 80 may be applied to the surface of the optoelectronic device on or in which the coupling surface 15 is provided, and/or to the fiber endpieces 40. The adhesive 80 shown in Figure 8 may be applied before or, alternatively, after positioning and/or aligning the wafer endpieces 40. Furthermore, the adhesive 80 may be hardened or cured in one step or in plural steps, for instance comprising a first pre-curing step which may be executed after or even before alignment. A final hardening step for completing the hardening process is then performed only after proper alignment has been accomplished. If only one hardening step is executed, it is executed after alignment has been accomplished.

According to Figures 7 and 8, one single gripper 60 or a pair grippers 60a, 60b, or any other number of grippers may be used for achieving alignment of each respective fiber. In particular, predetermined fiber bending may be achieved using at least two grippers 60a, 60b, for instance for the purpose of slightly retracting a fiber endpiece 40 from the coupling surface 15 before finally fixing it thereto by means of the adhesive 80. Retraction of the fiber endpiece 40 may be particularly beneficial to provide more margin of the optical fiber against mechanical stress caused thermally, particularly against tensional stress exerted when in use, that is during operation. Tensional stress may result in case that the mounting substrate 2, at temperatures higher than the ambient temperature during assembly of the optoelectronic device 1, expands stronger than the optical fiber, due to a larger temperature expansion coefficient of the printed circuit board compared to the optical fiber. An intentionally designed, artificial curvature or bend in the course of the optical fiber, particularly of its first fiber section 41, may compensate for such potential tensional forces without compromising a mechanically safe connection between the fiber endpiece and the substrate 10. Of course, mounting of the optical fiber 30 may also be performed at a mounting temperature higher than the room temperature to provide additional margin, in particular at a temperature above the intended operation temperature of the optoelectronic device. Whatever the mounting temperature selected, the intended fiber bend or fiber curvature will preferably be realized at least in a region of the first fiber section 41 between the first glue droplet 25 and the fiber endpiece 40.

According to one embodiment, one or plural droplets are applied and a fiber portion 42 is brought in contact with it and/or immersed in it, at an axial position corresponding to a distance between the substrate 10 and the fiber endpiece 40, which distance is smaller than a final target distance. Subsequently, the first fiber section 41 is bent, for instance using the two grippers of Figure 8, thus positioning the fiber endpiece at its target distance. The curved or bent course of the first fiber section 41 which slightly deviates from the first lateral direction x or normal direction of the coupling surface 15 may comprise deviations along the directions y and/or z. Preferably, only deviations along one of these two directions are realized. If two separate grippers 60a, 60b (as in Figure 8) are used, preferably both grippers are offset from the centered fiber position in the same direction, for instance along the direction y or z. Preferably, the amount of the deviation of the gripper 60b closer to the glue droplet 25 than the other gripper 60a is chosen larger than the deviation of the other gripper 60a closer to the fiber endpiece 40.

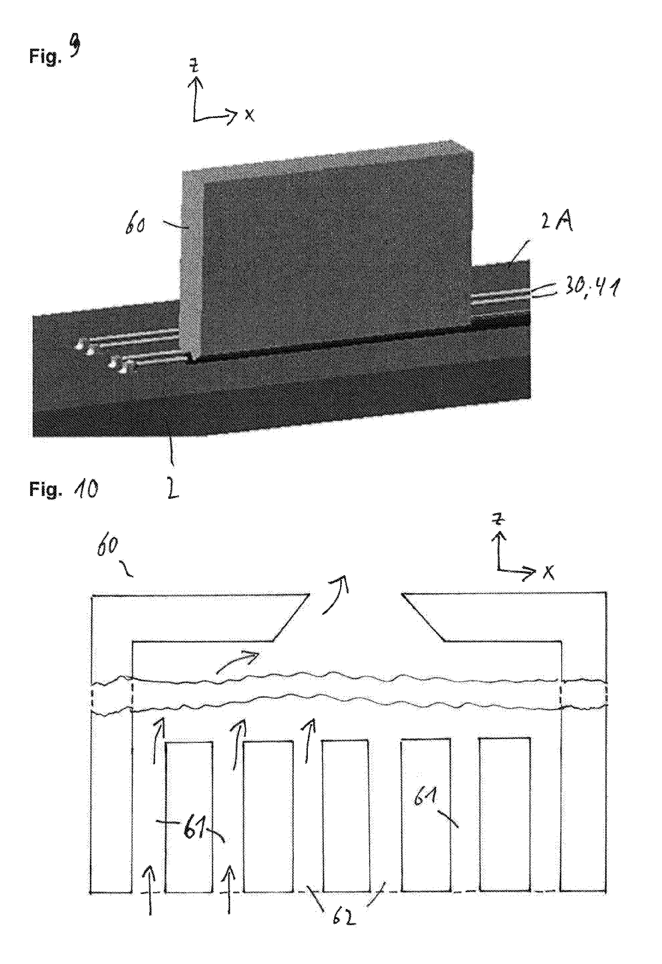

Figure 9 illustrates the step of guiding, positioning and/or aligning at least one optical fiber 30 using an alternative gripper 60 extending along a larger part of the length of the first fiber section 41. Preferably, along the axial direction a the gripper 60 has an elongate extension of at least 2 to 6 mm. Plural air suction tubes 61 may be provided within the gripper 60, preferably extending vertically downwards. Additionally, or alternatively, the tubes or channels may at least locally be connected to one another. At the gripping end at the bottom of the gripper 60, a plurality of at least two, preferably more than five air suction openings 62 are provided for holding the fiber at different gripping spots along its length. One gripper 60 of Figure 9 may thus suffice for properly positioning, aligning and optionally retracting the fiber section 41. In any of Figures 7 to 14, the bottom surface of the gripper may have a substantially cylindrical surface portion in which the one or plural air suction holes 62 are provided; the radius of the curvature of the cylindrical surface will correspond to the diameter of the optical fiber 30. The bottom surface of the gripper may also include a slightly deviating, non-linear shape so as to provide an additional curvature or bend of the fiber along its gripped length when being gripped and thus held. The bottom surface of the elongate gripper 60 may thus comprise an overall curvature along one of the directions y, z such that at least one or some of the air suction holes is or are offset in their position from the axial center line of the fiber. Whereas the illustrated embodiments depict grippers for gripping one single respective fiber, a gripper 60 can also comprise plural bottom surface portions for holding a plurality of fibers. Thereby a number of fibers may be aligned at the same time and in parallel to one another, especially when all these fiber endpieces 40 to be gripped have already been aligned and/or secured to the substrate 10 before. Referring to Figures 8 and 9, the same order of steps may be chosen as explained above with regard to Figure 7, for instance. Generally, it is advantageous to align and fix the fiber at the substrate first, before fixing the first fiber portion 42 and perhaps further fiber portionsby means of the at least one blue droplet 25. This ensures that the fiber endpiece 40 and/or the portion of the first fiber section 41 closest to it is oriented exactly orthogonally or perpendicularly to the coupling surface 15 of the optoelectronic substrate 10, that is along the normal direction n of the coupling surface 15.

Whereas Figures 7 to 9 show solder structures, any kind of contact structure 16 may be applied instead. Furthermore, a VCSEL, a photodiode or any other optoelectronic element 20 may be comprised on the inside and/or on the outside of the optoelectronic substrate. Preferably, the coupling surface 15 forms part of a top surface 11 of the actual chip or wafer piece constituting the optoelectronic substrate 10. As the substrate 10 is mounted on the mounting substrate 2 in an orientation turned by 90° compared to an orientation in which the main surface of the substrate 10, that is the chip or former wafer piece, would be coplanar to the mounting surface 2A, the former top surface 11 now forms a sidewall of the substrate 10 when mounted at the mounting surface 2A.

Figure 10 shows a cross-sectional view through the center of the gripper 60 of Figure 9 along the directions x and z, thus revealing where the air suction tubes 61 may for instance extend. Along the elongate extension x of the gripper 60, a plurality of preferably at least five air suction holes 62 is provided at the bottom surface, and air suction tubes 61 extend above them. The air suction tubes 61 may be linked with one another at an upper part of the gripper 60 as shown in Figure 10. An upper end of the gripper is connected to a tool generating a vacuum or sub-pressure lower than the ambient atmospheric pressure. Each of the air suction holes 62 and tubes 61 may be circular and tubular, respectively, in their cross-section within the plane spanned by the directions x and y. The tubes 61 may be realized by micro-bores or by micro-patterning in at least one of the halves of the gripper 60 before both halves are mounted together. For instance, Figure 10 may show the inner surface of the first half of the gripper arranged below the drawing plane, whereas another half (likewise shaped or shaped without any openings or bores at all) would be provided above the drawing plane when connected to the first half. Anyway, Figure 10 shows a cross-section of the entire gripper 60 roughly through its center with regard to the direction y. In the example of Figure 10, the plural bores or channels may be bores, slits or other kinds of recesses within the gripper 60. An appropriate system for micro-positioning and micro-aligning the optical fibers will be used in connection with the one or plural grippers 60 of one of Figures 7 to 10 for guiding, positioning and/or aligning the fiber.

Whereas in Figure 10 the suction holes 62 are all in the same vertical position, the suction holes 62 may alternatively be positioned at different vertical positions, preferably with the outermost suction holes 62 along the direction x being arranged at a low vertical position, whereas those suction holes 62 at the center of the gripper 60 along the direction x are arranged at higher vertical positions. Accordingly, the length of the outermost suction holes 62 may be longer, due to the vertical position of the outermost suction holes 62. Thereby a vertical bend of the gripped fiber or fiber portion is obtained, which bend may provide for additional margin of the optical fiber against mechanical and/or tensional stress caused thermally.

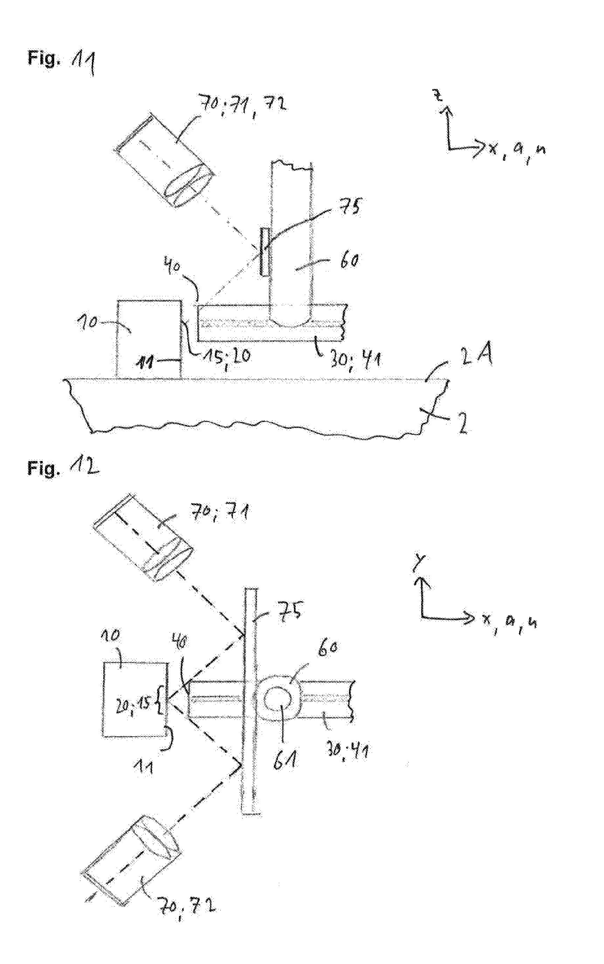

Figure 11 shows a cross-sectional view illustrating a step of positioning and/or aligning an optical fiber relative to the optoelectronic substrate using a monitoring equipment. The monitor equipment at least comprises one or plural camera systems 70, 71, 72, such as two video camera systems or photo camera systems, for observing both the fiber endpiece 40 and the coupling surface 15. Optionally, at least one mirror 75 may additionally be provided. For instance, a mirror 75 may be attached to the gripper 60 closest to the fiber endpiece; this allows easier monitoring without getting the camera systems 70, 71, 72 in the way of the gripper 60. However, monitoring can also be done without using mirrors, contrary to Figures 12 to 14. As illustrated in Figure 11, a viewing axis of the at least one video camera system 70 is, for instance, reflected by a mirror 75 and then directed to the coupling surface 15 of one respective optoelectronic substrate 10. If it contains plural coupling surfaces 15, for each coupling surface a monitored alignment step may be executed; preferably independently for each optical fiber 30. The optical system may comprise a camera (such as a photographic camera and/or a video camera, for instance a CMOS camera or a CCD camera) as well as a lens system for producing an image on a photo and/or video sensor, which image is a control image of the coupling surface 15 and/or of the fiber endpiece 40 as they are approaching one another. The guidance or positioning of the optical system or at least of the camera system 70 may for instance be performed by first positioning it such that the surface of the optoelectronic element, such as a VCSEL or a photodiode, for instance, or at least of its coupling surface 15, is arranged in or near the focus plane so as to create a sharp image of it. Alternatively, in case that the camera system 70 is to be moved together with the gripper 60 and the fiber 30, the focus plane of the optical system is first laid on the fiber endpiece 40, for instance. Preferably, two separate photo or video camera systems 71, 72 are used for observing the interspace between the optoelectronic element 20 and the fiber endpiece 40 from different directions. Thereby, the three-dimensional relative positions of the coupling surface and the fiber endpiece may be calculated more precisely. As indicated in Figure 11, the one or plural camera systems may be oriented diagonally, that is inclined to the vertical direction z. In the case using two separate camera systems 71, 72, they preferably are arranged on and monitoring from opposed sides of the fiber, from positions displaced along positive and negative direction y as shown in Figure 12 in top view.

According to Figure 12, both camera systems 71, 72 have an orientation inclined with regard to the axial direction x representing the first lateral direction and, at the same time, inclined with regard to the direction y, which orientations may further add to an inclined orientation relative to the vertical direction z. Anyway, both video cameras 70 are oriented such that they at least roughly are directed towards the interspace between the fiber endpiece and the coupling surface, either with or without amirror 75. If a mirror 75 is provided as in Figure 12, it may extend along the directions y and z and may be mounted at the gripper 60 closest to the optoelectronic substrate 10.

It is to be noted that the surface 11 of the optoelectronic substrate 10 which comprises the optoelectronic element may be larger, even much larger than the optoelectronic element 20 that is arranged in or is at least visually accessible from the surface 11. Accordingly, the lateral extensions of the optoelectronic element 20, in the directions y and z, may be much smaller than the extensions of the surface 11 of the optoelectronic substrate 10. Furthermore, the dimensions along the directions y, z of the coupling surface 15 or active area may be smaller, even much smaller than the lateral extensions of the optoelectronic element 20 as a whole. Although not depicted in Figure 12, the lateral extensions of the coupling surface 15 may be as small as or even smaller than a fiber endpiece 40, thus further reducing the diameter of the beam of light or radiation finally entering or exiting from the fiber endpiece 40. Accordingly, proper alignment and positioning of the fiber endpiece may be very critical, which is the reason why, conventionally, often additional substrate or substrate-like structural elements are needed to be formed and arranged on the mounting substrate, in addition to the optoelectronic substrate 10, in order to at least partially align the fiber endpiece at least along some directions and/or or to support and keep it at some local positions. These additional structural elements conventionally have surfaces against which the fiber endpiece will abut. Such conventional devices and methods, however, require aligned mounting of all these additional structural elements. The application, instead, teaches devices and methods obviating the need for forming and arranging such additional structural elements, thereby significantly reducing the effort and costs for forming the components of the optoelectronic device.

As further depicted in Figure 12, the gripper 60 comprises at least one air suction tube 61 ending at the corresponding air suction hole 62 at the bottom end of the gripping element through which the fiber is sucked and thereby gripped using subatmospheric pressure. As in Figure 11, both camera systems 70 may be moved along with the at least one gripper 60 or independently from it. Moreover, camera systems 71, 72 may be moved independently from each other. Although both options are possible, in the case that the mirror 75 is attached to at least one gripper 60, preferably the camera systems 70 as well as and the gripper 60 are moved as a unit.

According to one monitoring technique, the optical systems and especially the camera systems 70 are first positioned such that the coupling surface of the optoelectronic device appears sharply in the image sensor or display of the cameras. Subsequently, with each camera a video or photo image of the coupling surface 15 is shot and preferably stored. Via imaging processing, the position of the coupling surface 15 or active area in the three-dimensional space is calculated, for instance relatively to the mounting substrate 2. At this time, the fiber endpiece may be arranged sufficiently distant from the optoelectronic substrate 10 that the coupling surface 15 is not hidden from view by the fiber endpiece 40 or by the gripper. Subsequently, the fiber endpiece is positioned such that the contour of fiber appears at a predefined position in the respective image of each camera (which are two-dimensional images taken from a perspective view) in such a way that, firstly, at least the fiber endpiece of the fiber is centered, with regard to the coupling surface 15, along the directions y, z (which are the lateral directions of the coupling surface 15 oriented upright above the mounting surface 2A) and that, secondly and at the same time, the distance between the coupling surface and the fiber endpiece, particularly of its outermost portion along the axial direction a, correspond to a predefined distance along the first lateral direction x. This direction usually corresponds to the normal direction n of the coupling surface 15. By the use of at least two camera systems 71, 72, positioning and alignment of the optical fiber along all three directions in the three-dimensional space x, y, z is easily possible.

In case the optical system is maintained at a fixed position relative to the mounting surface 2A and the optoelectronic substrate 10, the captured images of the coupling surface 15 will not shift over time. This allows to predefine the desired position of the image of the fiber endpiece 40 in both images. If, however, the video camera systems 70 are moved after capturing the images of the coupling surface 15, for comparison with further images captured later the position of the coupling surface 15 in these further images has to be evaluated again relative to further locations (or image points) in the image. Finally, the fiber endpiece has to be aligned relative to these further locations.

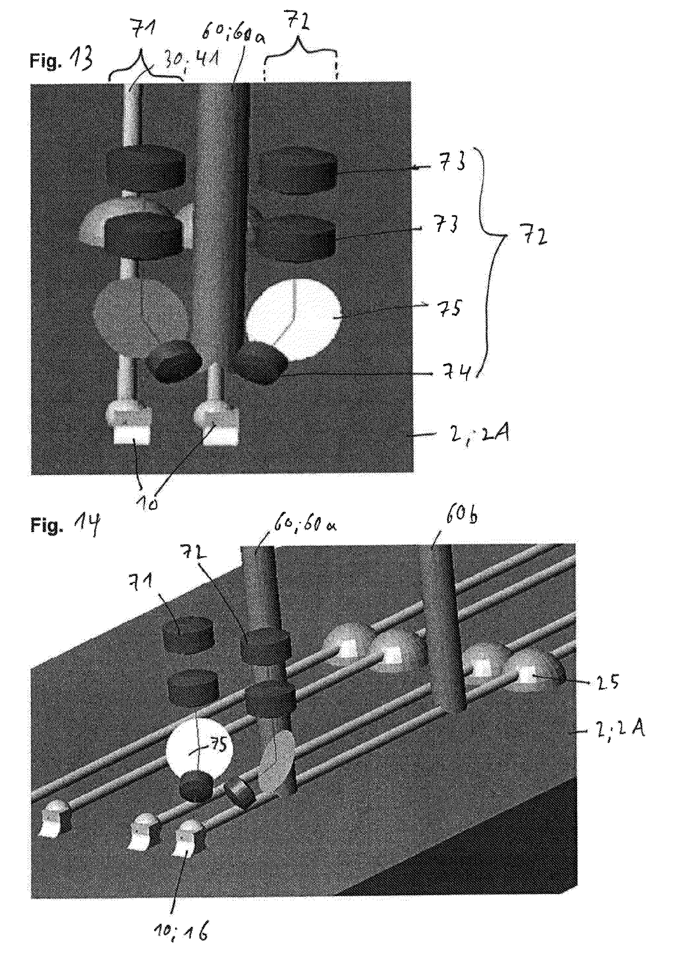

Figures 13 and 14 illustrate an embodiment of monitoring equipment having very compact dimensions and a short monitoring distance, particularly between the at least one camera system 71, 72 and the coupling surface 15 of the optoelectronic substrate 10 to be monitored. Figure 13 shows a perspective view from a direction roughly diagonal in the x-z-plane in which two fibers 30 are shown, one of them being guided or otherwise moved so as to achieve alignment with regard to the coupling surface 15. If an adhesive is already applied as illustrated in Figure 13 and 14, it will not be cured or hardened completely until the alignment procedure is finished. According to Figure 13, each of the two camera systems 71, 72 comprises, in addition to the respective camera (not illustrated), one or plural lenses 73, 74 and, preferably, an optional mirror 75 reflecting the path of light within each camera system. Accordingly, at least a part of the camera system, such as the lenses 73, may be oriented vertically and, optionally, may be connected to at least one gripper 60a.

As shown in Figure 14, further grippers 60b may be used. However, the camera systems 71, 72 preferably are attached to that gripper 60a which is located closest to the fiber endpiece 40 or the optoelectronic substrate 10. The further grippers 60b may be moved in the same way as the first gripper 60a at any time. However, according to another embodiment, some or each of the grippers 60a, 60b may be moved separately from the other ones, in particular for the sake of creating an intentional, predefined deviation, curvature or bending of the first fiber section 41 deviating from the normal direction n of the coupling surface 15. As explained above, a partial retraction of the fiber endpiece 40 and/or additional margin of the first fiber section 41 in view of mechanical stress (occurring due to thermal expansion of the mounting substrate 2 when the optoelectronic device 2 is in use) may be provided thereby.

In Figures 13 and 14 the optical systems, that is the camera systems 71, 72, mirrors 75 and/or lenses 73, 74 are arranged such that the fiber endpiece 40 and/or the coupling surface 15 is monitored from positions arranged within the axial extension of the optical fiber. Thereby, perspective views of the coupling surface 15 facing the fiber endpiece can easily be captured. Moreover, the camera systems 71, 72 may be connected to and moved with the gripper 60a as a unit.

The method of any of Figures 7 to 14 may comprise, apart from the step of mounting the at least one optoelectronic substrate 10 on the mounting surface 2A of the mounting substrate 2, the step of (b) assembling an optoelectronic device 1 by mounting at least one optical fiber 30, including the steps of:
b)i) coupling at least one fiber endpiece 40 of an optical fiber 30 to the at least one coupling surface 15 of the optoelectronic substrate 10; and
b)ii) securing at least one fiber portion 42, 44 of the optical fiber 30 arranged at a respective distance d1, d2 from the fiber endpiece 40 in a fixed position relative to the mounting surface 2A of the mounting substrate 2 by means of at least one glue droplet 25, 26, wherein the at least one fiber portion 42, 44 is brought into contact with and/or immersed in the respective glue droplet 25, 26.

The method of any of Figures 7 to 14 may be executed according to any of claims 7 to 15. Furthermore, before performing step b)i) and/or step b)ii), a step of cleaving the fiber endpiece and/or a step of uncoating the optical fiber may performed. These steps or one of them may be executed automatedly, for instance by a constructional unit comprising the at least one gripper 60. Thereby, cleaving, uncoating and gripping the optical fiber 30 may be performed with a high degree of automation and thus more efficiently. Regarding the uncoating step, the fiber endpiece 40 or some of the elements from the group of the fiber endpiece 40, the first fiber section 41, the first fiber region 42, the second fiber section 43 and/or a second fiber portion 44 may be uncoated. The cleaving step and/or the uncoating step may be performed during or before the fiber endpiece 40 and/or a fiber section 41 between the fiber endpiece 40 and the at least one fiber portion 42, 44 is guided, moved or otherwise aligned with respect to the coupling surface 15 of the optoelectronic substrate 10 or with respect to the glue droplet, respectively.

Furthermore, whereas in Figures 7 to 14 the alignment is measured be monitoring the position of the fiber endpiece 40 and of the coupling surface 15 relative to one another, alternatively the proper fiber alignment can be obtained by monitoring, that is measuring the coupling efficiency, that is the amount or fraction of electromagnetic radiation transferred between the coupling surface 15 and the optical fiber 30, depending of the position of the fiber endpiece 40. The optical fiber 30 and/ir its fiber endpiece 40 is then positioned at the position allowing maximum coupling efficiency, that is maximum amount or intensity of radiation transferred.

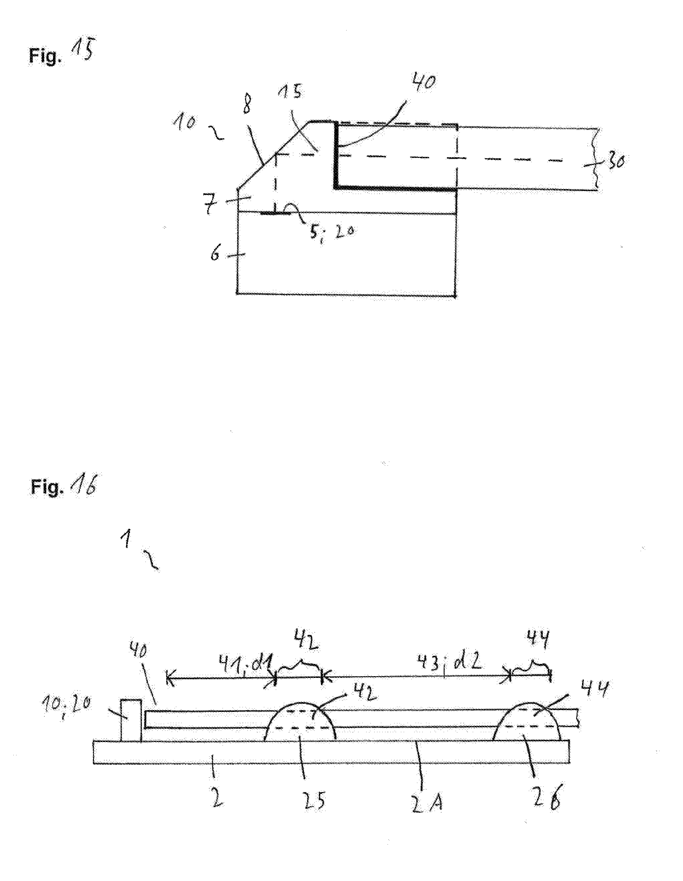

Figure 15 shows an embodiment of an optoelectronic substrate 10 being a compound substrate comprising a first substrate 6 containing the at least one optoelectronic element 20 and further comprising a fiber endpiece mounting block 7 shaped to receive at least one fiber endpiece 40 of the optical fiber 30 in a mounting position. The endpiece mounting block 7 may serve to predefine and thereby provide self-alignment of the mounting position along one or some directions. The first substrate 6, such as a chip or diced wafer piece, and the fiber endpiece mounting block 7 combinedly form an integral piece of the compound substrate representing the optoelectronic substrate 10. Accordingly, the coupling surface 15 may be an exterior surface or surface portion of the fiber endpiece mounting block 7, but the coupling surface 15 need not be the active area surface actually emitting or detecting the electromagnetic radiation. Instead, the coupling surface 15 can be a mechanical coupling surface of the integral compound substrate through which the electromagnetic radiation travels. Accordingly, the active area surface for emitting or detecting the electromagnetic radiation may be a interface surface 5 arranged inside the compound substrate. Furthermore, the interface surface 5 or active area surface for emitting or detecting the electromagnetic radiation may be oriented perpendicularly to the coupling surface 15 and may thus be oriented parallel or coplanar to the mounting surface 2A. The fiber endpiece mounting block 7 may thus comprise a reflective surface 8 inclined by about 45° for deflecting the beam of radiation by 90°.

As apparent from Figure 15, the application may take advantage of wafer-level production methods, for instance by using integral compound substrates comprising both a chip or wafer piece (in and/or on which the optoelectronic element 20 is provided) as well as a fiber endpiece mounting block 7 used for partially predefining the aligned momounting position of the fiber endpiece 40.

Figure 16 shows an embodiment comparable to Figure 1 but with an additional, second glue droplet 26 in which a second fiber portion 44 is immersed. The immersed second fiber portion 44 is connected to the first fiber portion 42 by a second fiber section 43 which may additionally be guided in like manner as the fiber section 41, as explained above.

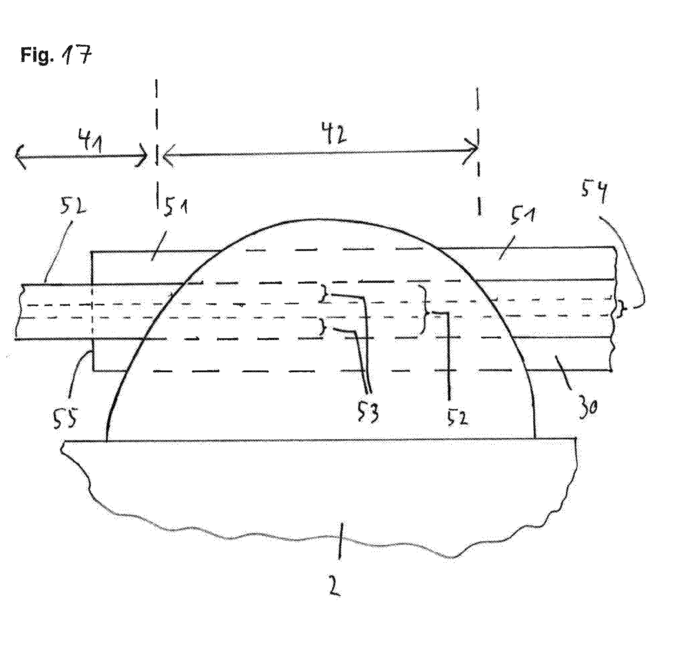

Figure 17 is a partial view of an optoelectronic device which shows a detail regarding the optical fiber 30, particularly at its fiber portion 42 arranged inside the glue droplet 25. The glue droplet 25 may be arranged on the mounting surface of the mounting substrate 2 or, alternatively, on a surface of a support block, such as a pedestal, arranged on the mounting substrate 2. Generally, as shown to Figure 17 in detail, the optical fiber 30 may be a coated fiber. The fiber coating 51 may encapsulate the radiation-transmissive material 52 of the optical fiber, which radiation-transmissive material 52 may comprise a fiber core 54 and a fiber cladding 53 around the fiber core 54.

According to Figure 17, the fiber coating 51 may extend at least along the first fiber portion 42 and may thus contact the material of the glue droplet directly. Furthermore, the fiber coating 51 may additionally extend along at least a part of the first fiber section 41. Accordingly, along the axial direction of the optical fiber 30, a coating endface 55 of the coating 51 may be located in a position between the first fiber portion 42 and the fiber endpiece 40. The coating endface 55 is thus positioned, along the axial fiber direction, at and around the first fiber section 41. The fiber endpiece 40, however, is uncoated.

The fiber coating as shown in Figure 17 may additionally be present in any of Figures 1 to 16. Particularly, the fibers shown in thtese Figures may comprise the coating illustrated in Figure 17 and may thus contact, with their fiber coating 51, the glue droplet 25. The axial position of the coating endface 55, however, may be positioned differently from Figure 17. The fiber coating around the optical fiber 30 and/or forming part of the optical fiber 30 may further be combined with any other embodiment of the application.

**Reference Signs**

| | |
|---|---|
| 1 | optoelectronic device |
| 2 | mounting substrate |
| 2A | mounting surface |
| 3 | recess |
| 4 | bottom surface |
| 5 | interface surface |
| 6 | first substrate |
| 7 | fiber endpiece mounting block |
| 8 | reflective surface |
| 10 | optoelectronic substrate |
| 11 | top surface |
| 12 | support surface |
| 13 | sidewall |
| 14 | rear surface |
| 15 | coupling surface |
| 16 | contact structure |
| 17 | bond wire |
| 18 | bond ball |
| 19 | solder material |
| 20 | optoelectronic device |
| 21 | electrical contact |
| 25, 26 | glue droplet |
| 30 | optical fiber |
| 35 | contact surface |
| 40 | fiber endpiece |
| 41 | first fiber section |
| 42 | first fiber portion |
| 43 | second fiber section |
| 44 | second fiber portion |
| 45 | reflective element |
| 51 | fiber coating |
| 52 | radiation-transmissive material |
| 53 | fiber cladding |
| 54 | fiber core |
| 55 | coating endface |
| 60, 60a, 60b | gripper |
| 61 | air suction tube |
| 62 | air suction hole |
| 70 | camera system |
| 71 | first camera system |
| 72 | second camera system |
| 73, 74 | lens |
| 75 | mirror |
| 80 | adhesive |
| A, B | optoelectronically active layer |
| a | axial direction |
| d | distance |
| D | mounting distance |
| d1 | first distance |
| d2 | second distance |
| h | height |
| n | normal direction |
| R | electromagnetic radiation |
| x | first lateral direction |
| y | second lateral direction |
| z | vertical direction |

## Claims

1. An optoelectronic device (1) at least comprising:
- a mounting substrate (2) having a mounting surface (2A);
- at least one optoelectronic substrate (10) comprising at least one optoelectronic element (20);
the optoelectronic substrate (10) further having a coupling surface (15) for emitting or receiving electromagnetic radiation to or from an optical fiber and further having a support surface (12) transverse to the coupling surface (15);
the optoelectronic substrate (10), with its support surface (12), being mounted at and supported by the mounting surface (2A) of the mounting substrate (2);
- at least one optical fiber (30) having a fiber endpiece (40); and
- at least one glue droplet (25, 26) in a position fixed relative to the mounting surface (2A); the glue droplet (25, 26) being made of a glue material or another adhesive material;
- wherein each optical fiber (30) comprises at least one fiber portion (42, 44) immersed in and/or contacting the at least one glue droplet (25, 26); the fiber portion (42, 44) being arranged at a distance (d1, d2) from the fiber endpiece (40) of the optical fiber (30); and
- wherein the fiber endpiece (40) is positioned in an aligned coupling position facing the coupling surface (15) of the optoelectronic substrate (10) for enabling communication with the optoelectronic element (20) via transmission of electromagnetic radiation.

2. The optoelectronic device of claim 1, wherein the at least one optical fiber (30) comprises a first fiber portion (42) immersed in and/or contacting a first glue droplet (25) and connected to the fiber endpiece (40) by a first fiber section (41), wherein an axial length of the first fiber section (41) is smaller than 10 mm.

3. The optoelectronic device of claim 1 or 2, wherein the coupling surface (15) is oriented perpendicularly to the mounting surface (2A) and wherein the optical fiber (30), at least in a region between the fiber endpiece (40) and at least one glue droplet (25, 26), is extending at a mounting distance (D) from the mounting surface (2A) smaller than the height (h) of the mounted optoelectronic substrate (10) in a direction normal to the mounting surface (2A).

4. The optoelectronic device of one of claims 1 to 3, wherein the support surface (12) of the at least one the optoelectronic substrate (10) is embedded, with its support surface (12), in the mounting substrate (2) at a depth beneath the mounting surface (2A).

5. The optoelectronic device of one of claims 1 to 4, wherein
the at least one the optoelectronic substrate (10) is electrically connected to the mounting surface (2A) by means of contact structures (16) placed on the coupling surface (15) or a surface comprising or surrouding the coupling surface (15), and on a rear surface (14).

6. The optoelectronic device of one of claims 1 to 5, wherein the coupling surface (15) of the at least one optoelectronic substrate (10) forms part of a stack of optoelectronically active layers (A, B) stacked on one another and designed for emission or detection of electromagnetic radiation mainly along their common normal direction (n), perpendicularly through the coupling surface (15), the coupling surface (15) being parallel to the optoelectronically active layers (A, B).

7. A method of assembling an optoelectronic device (1), the method comprising:
a) mounting at least one optoelectronic substrate (10) on a mounting surface (2A) of a mounting substrate (2),
the optoelectronic substrate (10) comprising at least one optoelectronic element (20),
the optoelectronic substrate (10) having at least one coupling surface (15) for emitting or receiving the electromagnetic radiation to or from an optical fiber and further having a support surface (12), the coupling surface (15) being transverse to the support surface (12); wherein the at least one optoelectronic substrate (10) is mounted, with its support surface (12), to the mounting surface (2A) of the mounting substrate (2); and
b) assembling an optoelectronic device (1) by mounting at least one optical fiber (30), including the steps of:
b)i) coupling at least one fiber endpiece (40) of an optical fiber (30) to the at least one coupling surface (15) of the optoelectronic substrate (10); and
b)ii) securing at least one fiber portion (42, 44) of the optical fiber (30) arranged at a respective distance (d1, d2) from the fiber endpiece (40) in a fixed position relative to the mounting surface (2A) of the mounting substrate (2) by means of at least one glue droplet (25, 26), wherein the at least one fiber portion (42, 44) is immersed in and/or in contact with the respective glue droplet (25, 26).

8. The method of claim 7, wherein the support surface (12) is a substrate sidewall of the optoelectronic substrate (10) orthogonal to the coupling surface (15), wherein the support surface (12) is stuck, glued, soldered, bonded or otherwise fixed directly to the mounting surface (2A) of the mounting substrate (2) in an orientation coplanar to the mounting surface (2A).

9. The method of claim 7 or 8, wherein the coupling surface (15) is a top surface (11) of the optoelectronic substrate (10) and wherein the coupling surface (15) is secured on edge to the mounting substrate (2).

10. The method of one of claims 7 to 9, wherein step b)i) includes forming conductive contact structures (16), thereby connecting electrical contacts (21) arranged on the coupling surface (15) and/or on an opposed rear surface (14) of the optoelectronic substrate (10) to the mounting substrate (2).

11. The method of one of claims 7 to 10, wherein step b)i) includes guiding the fiber endpiece (40) and/or a fiber section (41) arranged close to the fiber endpiece (40) towards the coupling surface (15) from its normal direction to approach an aligned coupling position with respect to the coupling surface (15).

12. The method of one of claims 7 to 11, wherein step b)ii) includes picking up each optical fiber (30) by means of a gripper (60) or a set of grippers (60a, 60b), such as air suction grippers, to position the at least one optical fiber (30) in the aligned coupling position.

13. The method of one of claims 7 to 12, wherein the guiding, positioning and/or coupling of each optical fiber (30) is monitored using a camera system (70) or a plurality of camera systems (71, 72), each camera system (71, 72) arranged on either side of the optical fiber (30).

14. The method of one of claims 7 to 13, wherein step b)i) is performed prior to step b)ii) and wherein step b)i) includes connecting the fiber endpiece (40) to the coupling surface (15) of the optoelectronic substrate (10) by means of a drop of adhesive (80) which is transparent at the wavelength of the optoelectronic element (20).

15. The method of one of claims 7 to 13, wherein step b)ii) is performed prior to step b)i) wherein, after performing step b)ii), the fiber endpiece (40) is slightly retracted from the coupling surface (15) by bringing at least a first fiber section (41) arranged between the fiber endpiece (30) and a first fiber portion (42) in a bending and/or meandering position so as to increase the margin of the optical fiber (30) near the fiber endpiece (40) against tensional stress, and wherein step b)i) is performed afterwards.
